# EUROPÄISCHE PATENTSCHRIFT

(11) **EP 1 133 638 B1**
(45) Veröffentlichungstag und Bekanntmachung des Hinweises auf die Patenterteilung: **09.07.2003**
(21) Anmeldenummer: 99952554.6
(22) Anmeldetag: 12.10.1999
(51) Int. Cl.: F03D 7/02

(54) **AZIMUTANTRIEB FÜR WINDENERGIEANLAGEN**
AZIMUTHAL DRIVING SYSTEM FOR WIND TURBINES
ORGANE D'ENTRAINEMENT AZIMUTAL POUR EOLIENNES

(30) Priorität: 26.11.1998 DE 19854683; 05.05.1999 DE 19920504
(43) Veröffentlichungstag der Anmeldung: 19.09.2001
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: EP9907655
(87) Internationale Veröffentlichungsnummer: WO00031413

(56) Entgegenhaltungen:
- US-A- 4 554 980
- US-A- 4 966 525
- US-A- 5 198 734
- US-A- 5 374 885
- R. GASCH: "Windkraftanlagen" 1999 , B.G. TEUBNER , STUTTGART XP002130509 291 Seite 72 Seite 90

## Beschreibung

Windenergieanlagen haben in der Regel für die Windrichtungsnachführung einen aktiven Antrieb. Dieser verdreht das Maschinenhaus der Windenergieanlage so, daß die Rotorblätter des Rotors in Richtung des Windes ausgerichtet werden. Dieser für die Windrichtungsnachführung benötigte Antrieb ist regelmäßig ein Azimutantrieb, welcher sich mit den zugehörigen Azimutlagern gewöhnlich zwischen Turmkopf und dem Maschinenhaus befindet. Bei kleinen Windenergieanlagen genügt ein Verstellantrieb, größere Windenergieanlagen sind in der Regel mit mehreren Azimutantrieben ausgestattet.

Bei der Windrichtungsnachführung des Maschinenhauses liefert ein Betriebswind-Meßsystem einen Mittelwert für die Windrichtung über einen gewissen Zeitraum, z.B. 10 Sekunden. Dieser Mittelwert wird immer wieder mit der momentanen Azimutposition des Maschinenhauses verglichen. Sobald eine Abweichung einen bestimmten Wert überschreitet, wird das Maschinenhaus entsprechend nachgestellt, so daß die Windrichtungsabweichung des Rotors, der Gierwinkel, möglichst gering ist, um Leistungsverluste zu vermeiden. Wie eine Windrichtungsnachführung bei bekannten Windenergieanlagen durchgeführt wird, ist in "Windkraftanlagen", Erich Hau, 2. Auflage, 1995, Seite 268 ff. bzw. 316 ff. beschrieben.

Aus US 4,966,525 A ist eine Windenergieanlage mit den Merkmalen des Oberbegriffs des Anspruchs 1 bekannt. Aus US 5,374,885 A ist eine Antriebseinrichtung für eine Textilmaschine bekannt, bei welcher ein Asynchronmotor als Antriebsmotor eingesetzt wird und durch Beaufschlagung mit Gleichstrom verschleißfrei abgebremst wird. Aus US 5,198,734 A ist ein "Backspinning Motor" bekannt, bei welchem mittels eines Wechselrichters für den Motor eine Gleichspannung eingestellt wird zum Abbremsen des Motors bis zum Stillstand. Aus R. Gasch: "Windkraftanlagen" 1999, B.G. Teubner, Stuttgart, Seiten 72 und 90 ist bekannt, wie eine Windenergieanlage mittels eines passiven Nachführungssystems oder mittels eines aktiven Systems eines elektrischen oder auch hydraulischen Giermotors eingestellt wird.

Bei bisher bekannten Windenergieanlagen übernimmt eine motorische Windrichtungsnachführung des Maschinenhauses, das Azimutverstellsystem, die Aufgabe, den Rotor und das Maschinenhaus automatisch nach der Windrichtung auszurichten. Funktionell gesehen ist die Windrichtungsnachführung eine selbständige Baugruppe. Vom konstruktiven Standpunkt aus betrachtet, bildet sie den Übergang des Maschinenhauses zum Turmkopf. Ihre Komponenten sind teils im Maschinenhaus, teils in den Turmkopf integriert. Das Gesamtsystem der Windrichtungsnachführung besteht aus den Komponenten Stellantrieb, Haltebremsen, Verriegelungseinrichtung, Azimutlager und Regelungssystem. Diese Komponenten arbeiten wie folgt:

Für den Stellantrieb gibt es ähnlich wie für den Rotorblattverstellantrieb die Alternative hydraulisch oder elektrisch. Beide Ausführungen sind bei Windenergieanlagen üblich. Kleine Anlagen verfügen meistens über ungeregelte elektrische Antriebsmotoren. Bei großen Anlagen sind die hydraulischen Stellantriebe in der Überzahl.

Um zu vermeiden, daß das Giermoment um die Drehachse nach erfolgter Nachführung von Antriebsmotoren gehalten werden muß, ist eine Drehhemmung oder eine Gierbremse erforderlich. Anderenfalls wäre die Lebensdauer der Antriebsaggregate oder der vorgeschalteten Getriebe kaum zu gewährleisten. Kleine Anlagen begnügen sich meistens mit einer Drehhemmung im Azimutlager, für größere Anlagen sind mehrere lösbare Haltebremsen bekannt. Diese greifen auf einen Bremsring an der Innenseite des Turms oder umgekehrt an einem Ring am Maschinenhaus an. Während des Nachführvorgangs sind eine oder zwei Azimutbremsen im Eingriff, um die erforderliche Dämpfung der Verstelldynamik zu gewährleisten. Der Stellantrieb muß dabei so ausgelegt werden, daß er gegen diese Reibungsdämpfung nachführen kann. Das Azimut- oder Turmkopflager wird regelmäßig als Wälzlager ausgeführt.

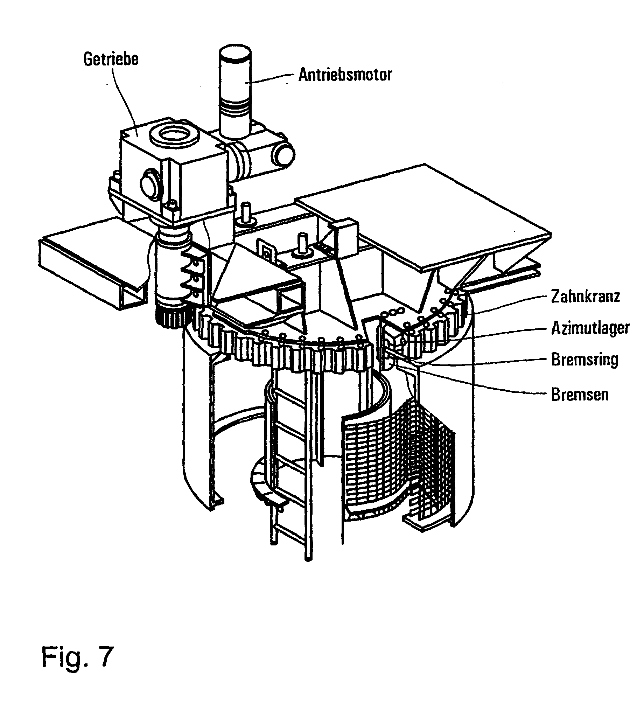

In Figur 7 ist eine Teilschnittansicht eines bekannten Windrichtungsnachführungssystems mit elektrischem Stellantrieb der Westinghaus WTG-0600 dargestellt.

Während des Betriebs einer Windenergieanlage mit turbulenten Winden treten - in Abhängigkeit vom Drehwinkel des Rotors - sehr hohe Kräfte und damit verbundene hohe und häufige Lastspitzen in den Azimutantrieben auf.

Wenn mehr als ein Azimutantrieb vorgesehen ist, kommt es zusätzlich zu einer sehr hohen Unsymmetrie in den einzelnen Antrieben. Diese Antriebe haben eine Übersetzung mittels eines Getriebes von ca. 15.000. Kleinste Abweichungen in der Verzahnung am Umfang des Turmlagers führen sofort zu sehr starken Unsymmetrien, wenn mehr als ein Antrieb, z.B. vier Azimutantriebe, am Umfang des Turmlagers mit integrierter Verzahnung angebracht ist. Wegen der hohen Getriebeübersetzung entsprechen diese kleinen Abweichungen auf der Eingangsseite des Antriebs bis zu 15 bis 20 Umdrehungen auf der Ausgangsseite.

Das bedeutet im Ergebnis, daß während und nach jedem Verdrehvorgang des Maschinenhauses die gesamte Last und das gesamte Drehmoment gleichzeitig auf einzelne Antriebe, wenn möglich, gleichmäßig verteilt werden muß. Zusätzlich sollen die Antriebe bei starken Azimutlasten während der Stillstandszeiten bei zu hohen Lasten nachgeben und eine leichte Drehung des Maschinenhauses ermöglichen, damit sich eine entsprechende Entlastung einstellen kann.

Ferner treten während der Windnachführung des Maschinenhauses der Windenergieanlage bei starken Turbulenzen auch entsprechend hohe Drehmomente auf. Diese regen die Azimutantriebe derart an, daß die Motoren gegeneinander schwingen. Die Getriebe mit ihrem sehr hohen Übersetzungsverhältnis reagieren dabei wie eine Feder und große Drehmomentschwankungen der einzelnen Antriebe sind die Folge.

Es ist Aufgabe der Erfindung, den Azimutantrieb für Windenergieanlagen zu verbessern, so daß die vorstehend genannten Probleme beseitigt werden, einen konstruktiv einfachen Azimutantrieb zu schaffen, eine gleichmäßige Lastenverteilung für jeden Azimutantrieb zu gewährleisten und unerwünschte Drehmomentschwankungen der einzelnen Antriebe zu vermeiden.

Erfindungsgemäß wird eine Windenergieanlage nach Anspruch 1 vorgeschlagen. Vorteilhafte Weiterbildungen sind in den Unteransprüchen 2 bis 5 beschrieben.

Die erfindungsgemäße Windenergieanlage mit einem Maschinenhaus, das einen Rotor mit wenigstens einem Rotorblatt aufnimmt, zeichnet sich dadurch aus, daß die Verstelleinrichtung zur Verstellung des Maschinenhauses gemäß der jeweiligen Windrichtung als Azimutantrieb mindestens einen Drehstrom-Asynchronmotor aufweist, der während der Verstellung des Maschinenhauses mit Drehstrom und während der Stillstandszeit des Maschinenhauses zeitweise oder vollständig mit Gleichstrom beaufschlagt wird.

Nach dem Verstellvorgang mittels Drehstrom wird der Motor abgeschaltet und erzeugt somit kein Drehmoment mehr. Um nunmehr auch für eine Bremswirkung des Antriebsmotors zu sorgen und während der Stillstandszeit beim Auftreten von Lastspitzen noch ein ausreichendes Bremsmoment zu erhalten, wird der Drehstrom-Asynchronmotor unmittelbar nach der Trennung vom Drehstromnetz mit einem Gleichstrom beaufschlagt. Dieser Gleichstrom erzeugt ein stehendes Magnetfeld in den Asynchronmotor, der damit sofort abgebremst wird. Die Gleichstromversorgung bleibt möglichst während der gesamten Stillstandszeit bestehen.

Zur Unterdrückung von unerwünschten Drehmomentschwankungen wird erfindungsgemäß eine Drehrnomentkontrolle vorgesehen. Die Abbremsung des Drehstrom-Asynchronmotors kann z.B. linear mit Hilfe der Höhe des Gleichstroms eingestellt werden. Damit ergibt sich eine einfache Drehmomentkontrolle für die Azimutantriebe von Windenergieanlagen während des eigentlichen Stillstandes.

Ferner werden, wenn die Verstelleinrichtung mehrere Drehstrom-Asynchronmotoren aufweist, die Drehstrom-Asynchronmotoren mit Hilfe eines Stromtransformators elektrisch z.B. in Gegenkopplung gekoppelt, so daß der einzelne Antrieb stabilisiert ist und der bislang unerwünschte Federeffekt unterdrückt wird.

Die Erfindung wird nachstehend anhand eines Ausführungsbeispiels in den Zeichnungen näher erläutert. Es zeigen:
- Fig. 1: eine schematische Anordnung von vier Azimutantrieben einer Verstelleinrichtung am Maschinenhaus;
- Fig. 2: eine Drehmoment/Drehzahl-Kennlinie eines Drehstrom-Asynchronmotors;
- Fig. 3: die Kennlinie eines Drehstrom-Asynchronmotors im Gleichstrombetrieb;
- Fig. 4: eine alternative Darstellung zur Fig. 3;
- Fig. 5: ein Blockschaltbild einer Stromtransformatorkopplung von zwei Asynchron-Azimutantrieben;
- Fig. 6: Schaltbild für einen Azimutmotor
- Fig. 7: Teilschnittansicht einer bekannten Windrichtungsnachführung mit elektrischem Stellantrieb.

Windenergieanlagen haben in der Regel für die Windrichtungsnachführung einen aktiven Antrieb. Dieser verdreht den Maschinenkopf der Windenergieanlage so, daß die Rotorblätter des Rotors in Richtung des Windes optimal ausgerichtet werden.

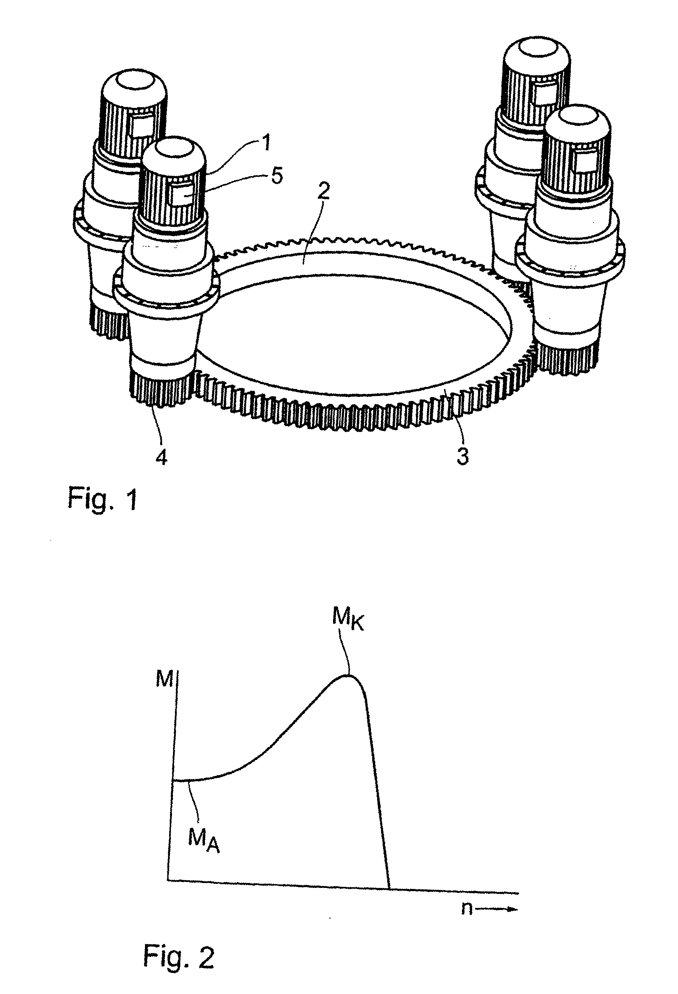

Der aktive Antrieb für die Windrichtungsnachführung ist ein Azimutantrieb 1 mit dem zugehörigen Azimutlager 2 und befindet sich in der Regel zwischen dem Turmkopf und dem Maschinenhaus. Bei kleinen Windenergieanlagen genügt ein Azimutantrieb, größere Windenergieanlagen sind in der Regel mit mehreren Antrieben, zum Beispiel vier Antrieben, wie in Figur 1 dargestellt. Die vier Antriebe 1 sind gleichmäßig über dem Umfang des Turmkopfes 3 verteilt (auch eine ungleichmäßige Verteilung ist möglich).

Während des Betriebs einer Windenergieanlage mit turbulenten Winden treten - in Abhängigkeit vom Drehwinkel des Rotors - sehr hohe Kräfte und damit verbundene hohe und häufige Lastspitzen in den Azimutantrieben auf.

Wenn die Verstellrichtung zur Verstellung des Maschinenkopfes mehr als einen Azimutantrieb 1 aufweist, kommt es zusätzlich zu einer sehr hohen Unsymmetrie in den einzelnen Antrieben 1. Diese Antriebe haben ein Übersetzungsgetriebe 4 (Getriebe; nicht dargestellt) mit einer Übersetzung von ca. 15.000. Kleinste Abweichungen in der Verzahnung der Übersetzungsgetriebe am Umfang des Turmlagers führen sofort zu sehr starken Unsymmetrien, wenn mehr als ein Antrieb, am Umfang des Turmlagers mit integrierter Verzahnung angebracht ist. Wegen der hohen Getriebeübersetzung entsprechen diese kleinen Abweichungen auf der Eingangsseite des Antriebs bis zu 15 bis 20 Umdrehungen auf der Ausgangsseite.

Das bedeutet, daß während und nach jedem Verdrehvorgang des Turmkopfes die gesamte Last/Drehmoment gleichmäßig auf einzelne Antriebe verteilt werden muß. Zusätzlich sollen die Antriebe bei starken Azimutlasten während der Stillstandszeiten - des Turmkopfes - bei zu hohen Lasten nachgeben und eine leichte Drehung des Maschinenkopfes ermöglichen.

Jeder Azimutantrieb 1 weist einen eigenen Motor 5 auf und die Motoren sind untereinander verschaltet und werden gemeinsam gesteuert. Wenn während der Windnachführung des Maschinenkopfes der Windenergieanlage - verursacht durch starke Turbulenzen - starke Drehmomente auftreten, regen diese Drehmomente die Azimutantriebe an, daß die Motoren gegeneinander schwingen oder zu Schwingungen neigen. Die Getriebe 4 mit ihrem sehr hohen Übersetzungsverhältnis reagieren dabei wie eine Feder, was große Drehmomentenschwankungen der einzelnen Antriebe zur Folge hat.

Um eine gleichmäßigen Aufteilung der Lasten während der Zeit, in der das Maschinenhaus nicht verdreht wird, zu gewährleisten, wird erfindungsgemäß vorgeschlagen, als Antriebsmotoren zum Azimutantrieb einen Drehstrom-Asynchronmotor als Asynchron-Antriebsmaschine einzusetzen. Deren Drehmoment/Drehzahl-Kennlienie ist in Figur 2 dargestellt. M_{A} bedeutet Anfangsdrehmoment, M_{K} bedeutet Kippmoment.

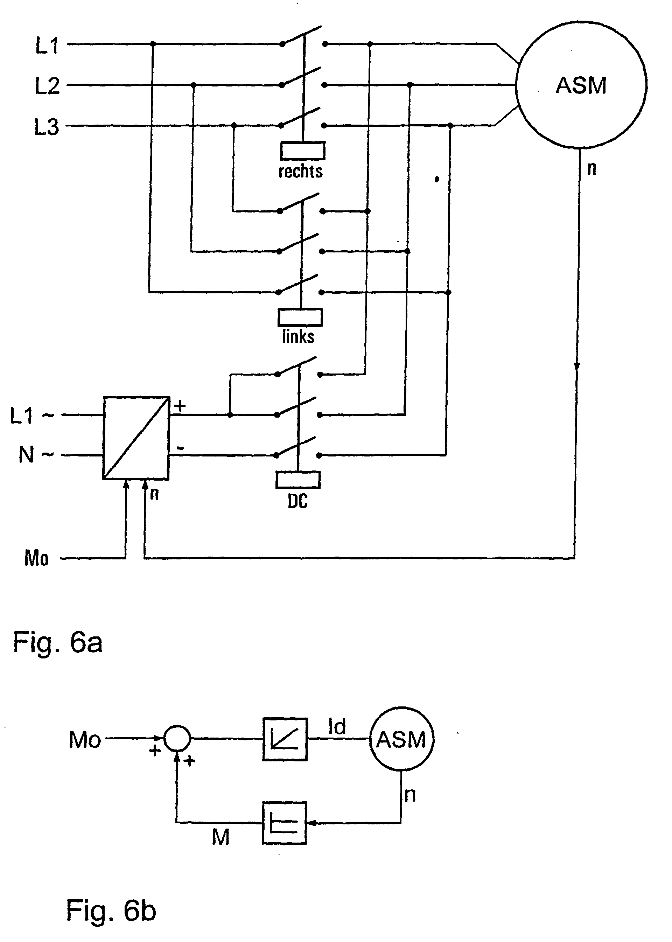

Nach dem Verstellvorgang des Maschinenhauses werden die vier Drehstrom-Asynchron-Motoren (ASM) abgeschaltet und erzeugen somit kein Drehmoment mehr. Um die Motoren gleichmäßig abzubremsen und auch danach noch ein Bremsmoment zu erhalten, werden die Motoren umgehend nach der Trennung vom Drehstromnetz, möglichst sofort, mit einem Gleichstrom beauftragt (siehe Figur 6a). Dieser Gleichstrom erzeugt ein stehendes Magnetfeld in den Motoren (Asynchronmaschine), die damit sofort abgebremst werden. Diese Gleichstromversorgung bleibt möglichst während der gesamten Stillstandzeit bestehen und kann in der Amplitude geregelt werden.

Nach dem Verstellvorgang werden die ASM-Antriebe mittels einer Regeleinrichtung - in Figur 6b - mit einem geregelten Gleichstrom versorgt. Langsame Drehbewegungen des Turmkopfes, die durch unsymmetrische Windböen verursacht werden, werden durch einen kleinen Gleichstrom (ca. 10% vom Nennstrom) nur gedämpft, aber zugelassen. Schnellere Drehbewegungen werden durch einen angepaßten höheren Gleichstrom, und damit höheren Bremsmoment, vermieden. Bei sehr schnellen Drehbewegungen wird der Gleichstrom bis auf den Nennstrom des Motors angehoben.

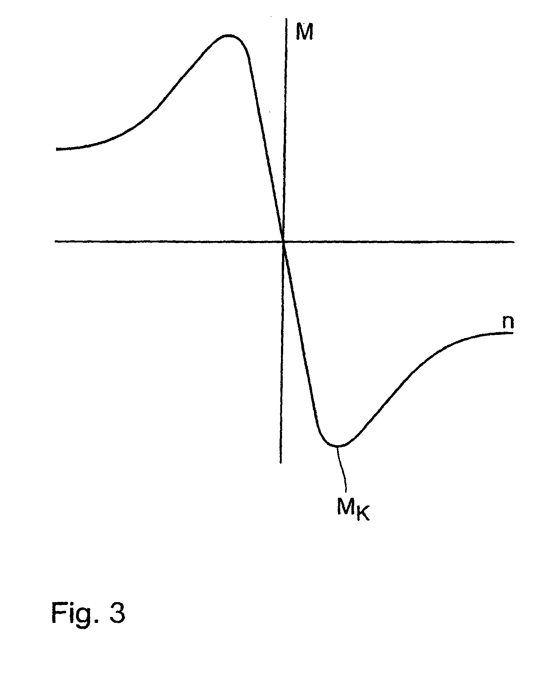

Die Drehmomenten/Drehzahl-Kennlinie eines Asynchronmotors im Gleichstrombetrieb ist in Figur 3 dargstellt. Der Antriebsmotor erzeugt mit der Gleichstrommagnetisierung im Stillstand kein Drehmoment. Aber mit steigender Drehzahl - bis etwa 6 % der Nenndrehzahl - steigt das erzeugte Drehmoment linear an und das symetrisch in beide Drehrichtungen. Gemäß dieser Kennlinie wird die auftretende Last auch gleichmäßig auf alle Azimutantriebe verteilt und es stellt sich passiv immer ein Gleichgewicht ein.

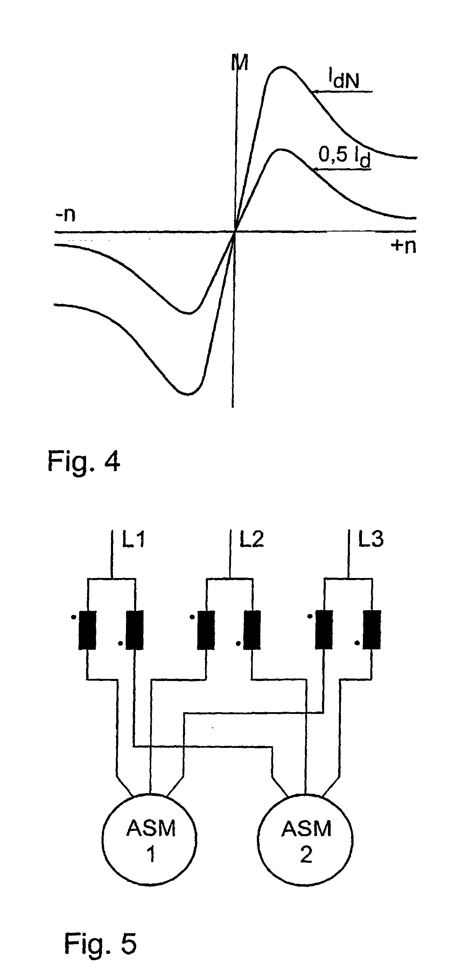

Zur Drehmomentkontrolle der Azimutantriebe kann die Steilheit der Bremskurve linear mit der Höhe des Gleichstroms eingestellt werden. Dies ist in Figur 4 dargestellt. Damit ergibt sich eine einfache Drehmomentkontrolle für die Azimutantriebe von Windenergieaniagen während des eigentlichen Stillstandes.

Ferner ist es sinnvoll, die einzelnen Motoren der Azimutantriebe mit Hilfe eines Stromtransformators zu koppeln. Dies ist in Figur 5 gezeigt. ASM bedeutet hierbei Asychronmaschine. Eine solche einfache dargestellte Gegenkoppelung stabilisiert die Antriebe.

Figur 7 zeigt eine Teilschnittansicht einer bekannten Windrichtungsnachführung mit elektrischem Stellantrieb, wie sie aus Erich Hau, "Windkraftanlagen" Springer-Verlag Berlin Heidelberg 1996, Seiten 268-271 bekannt ist.

## Patentansprüche

1. Windenergieanlage mit einem Maschinenhaus, das einen Rotor mit wenigstens einem Rotorblatt aufnimmt und einer Verstelleinrichtung zur Verstellung des Maschinenhauses zur gewünschten Ausrichtung des Rotors in Richtung des Windes,
**dadurch gekennzeichnet, dass** die Verstelleinrichtung als Antrieb (1) wenigstens einen Drehstrom-Asynchronmotor (5) aufweist, der für eine Verstellung des Maschinenhauses mit einem Drehstrom beaufschlagt wird und während der Stillstandszeit des Maschinenhauses zeitweise oder vollständig mit einem Gleichstrom beaufschlagt wird.

2. Windenergieanlage nach Anspruch 1,
**dadurch gekennzeichnet**, daßder Drehstrom-Asynchronmotor (5) nach Abschalten des Drehstroms zur Abbremsung mit dem Gleichstrom beaufschlagt wird.

3. Windenergieanlage nach Anspruch 1 oder 2,
**dadurch gekennzeichnet, daß** die Abbremsung des Drehstrom-Asynchronmotors (5) am Ende des Verstellvorgangs mittels der Höhe des Gleichstroms gesteuert wird.

4. Windenergieanlage nach einem der vorhergehenden Ansprüche,
**dadurch gekennzeichnet, daß** die Verstelleinrichtung mehrere Drehstrom-Asynchronmotoren (5) aufweist, welche miteinander gekoppelt sind.

5. Windenergieanlage nach Anspruch 4,
**dadurch gekennzeichnet, daß** die Drehstrom-Asynchronmotoren (5) mittels eines Stromtransformators elektrisch miteinander gekoppelt sind.

## Claims

1. Wind energy system having a machine housing, which accommodates a rotor having at least one rotor blade, and having an adjustment device for adjusting the machine housing for desired alignment of the rotor in the direction of the wind,
**characterized in that** the adjustment device has as the drive (1) at least one three-phase asynchronous motor (5), to which three-phase power is applied in order to adjust the machine housing, and to which a direct current is applied at times or all the time during the period when the machine housing is at rest.

2. Wind energy system according to Claim 1,
**characterized in that** the three-phase asynchronous motor (5) has the direct current applied to it for braking once the three-phase power has been switched off.

3. Wind energy system according to Claim 1 or 2,
**characterized in that** the braking of the three-phase asynchronous motor (5) at the end of the adjustment process is controlled by means of the magnitude of the direct current.

4. Wind energy system according to one of the preceding claims,
**characterized in that** the adjustment device has two or more three-phase asynchronous motors (5) which are coupled to one another.

5. Wind energy system according to Claim 4,
**characterized in that** the three-phase asynchronous motors (5) are electrically coupled to one another by means of a current transformer.

## Revendications

1. Installation d'énergie éolienne avec un bâtiment des machines, qui reçoit un rotor avec au moins une pale de rotor et un dispositif de réglage pour le réglage du bâtiment des machines pour l'orientation souhaitée du rotor dans la direction du vent,
**caractérisée en ce que** le dispositif de réglage présente comme entraînement (1) au moins un moteur asynchrone triphasé (5), qui est alimenté avec un courant triphasé pour un réglage du bâtiment des machines et est alimenté temporairement ou complètement avec un courant continu pendant la durée d'arrêt du bâtiment des machines.

2. Installation d'énergie éolienne selon la revendication 1,
**caractérisée en ce que** le moteur asynchrone triphasé (5) est alimenté avec le courant continu après la déconnexion du courant triphasé pour le freinage.

3. Installation d'énergie éolienne selon la revendication 1 ou 2,
**caractérisée en ce que** le freinage du moteur asynchrone triphasé (5) est commandé à la fin de l'opération de réglage au moyen du niveau du courant continu.

4. Installation d'énergie éolienne selon l'une quelconque des revendications précédentes,
**caractérisée en ce que** le dispositif de réglage présente plusieurs moteurs asynchrones triphasés (5), qui sont couplés entre eux.

5. Installation d'énergie éolienne selon la revendication 4,
**caractérisée en ce que** les moteurs asynchrones triphasés (5) sont couplés entre eux au niveau électrique au moyen d'un transformateur de courant.
